# EUROPEAN PATENT APPLICATION

(11) **EP 2 506 590 A1**
(43) Date of publication of application: **03.10.2012**
(21) Application number: 12156963.6
(22) Date of filing: 24.02.2012
(51) Int. Cl.: H04N 21/418, H04N 21/436, H04N 21/6334, H04N 21/6377

(54) **Authentication Certificates**

(30) Priority: 28.03.2011 GB 201105157
(71) Applicant: Sony Corporation, Tokyo 108-0075 (JP); Sony Europe Limited, Brooklands Weybridge Surrey KT13 0XW (GB)
(72) Inventor: Moore, Nigel Stuart, Newbury, Berkshire RG14 1XF (GB)
(74) Representative: Turner, James Arthur

(57) **Abstract**

An audio/video content delivery system comprises a network content source linked by an internet data connection to a content receiver, the content receiver being configured to receive content from the network content source via the internet data connection and to receive access-controlled encoded broadcast content from that or another content source acting as a broadcast content source via a separate broadcast data path, in which: the network content source is configured to request a client certificate from the content receiver for use in verifying the identity of the content receiver; the content receiver comprises: a host module configured to store a network client certificate and to send the network client certificate to the network content source in response to a request from the network content source; and a removable conditional access module (CAM), the CAM having an access control unit for decoding the access-controlled encoded broadcast content, the host module and the removable CAM being arranged to provide an encrypted communication link for decoded access-controlled encoded broadcast content between the conditional access module and the host module; the broadcast content source and the CAM are configured to communicate via the broadcast data path so as to transmit a client certificate to the CAM, as access-controlled broadcast data; and the CAM is configured to transmit at least a part of the client certificate received from the broadcast content source to the host module via the encrypted communication link between the CAM and the host module, for storage by the host module as the network client certificate.

## Description

This invention relates to authentication certificates.

The DVB Common Interface ("CI") specification allowed a television receiver or set top box (a "host") to interact with a secure hardware module (a conditional access module or "CAM") to allow the host to decrypt access-controlled content. The CI specification defines an interface between the host and the CAM, so that the two will work together if both conform to the CI specification. This interoperability provided a significant benefit of the CI system, as, in principle, it allowed consumers a choice of compatible products from different manufacturers.

In the CI specification the CAM interacts with a smart card and/or a user's personal identification number ("PIN") to provide user authentication.

However, a disadvantage of the original CI specification is that it gave the potential for the decrypted digital content to be copied. This problem arises from the way in which the host and CAM interact. In use, the host sends encrypted data to the CAM. The CAM checks the user authentication and, assuming that the user is authenticated, it decrypts the access-controlled content. The CAM then sends the decrypted content back to the host over the CAM-host interface, which is generally a PCMCIA (Personal Computer Memory Card International Association) interface. This connection from the CAM to the host represents a security weakness, in that the decrypted digital content can in principle be intercepted and unlawfully copied. This security weakness meant that some content providers preferred integrated devices, which have the host and CAM as a single unit, because this allowed them better security over the transfer of unencrypted data from the CAM to the host. However, this of course acted against the advantage associated with CI, relating to the potential interoperability of different CAMs and hosts.

The CI+ specification was drafted to address these problems, by two main routes. CI+ provides a secure interface between the CAM and the host, so that decrypted content data is not sent in clear form between the two devices. Also, CI+ provides for the authentication of both the host and the CAM, rather than the CI technique of authenticating only the CAM.

The PCMCIA interface between a host and a CAM is protected by encrypting the decrypted content data before it is sent from the CAM to the host, and then decrypting it at the host. This encryption is separate to the access control encryption-decryption established by the content provider, and is specific to each particular CAM-host pair. Keys are exchanged between the CAM and host by the Diffie-Hellman key exchange technique. The keys are also cycled from time to time, so that even if a key was compromised, it would in any event be changed a few seconds later.

In summary, a trusted channel is formed between the CAM and host.

This invention provides an audio/video content delivery system comprising a network content source linked by an internet data connection to a content receiver, the content receiver being configured to receive content from the network content source via the internet data connection and to receive access-controlled encoded broadcast content from that or another content source acting as a broadcast content source via a separate broadcast data path, in which:
the network content source is configured to request a client certificate from the content receiver for use in verifying the identity of the content receiver;
the content receiver comprises:
   a host module configured to store a network client certificate and to send the network client certificate to the network content source in response to a request from the network content source; and
   a removable conditional access module (CAM), the CAM having an access control unit for decoding the access-controlled encoded broadcast content, the host module and the removable CAM being arranged to provide an encrypted communication link for decoded access-controlled encoded broadcast content between the conditional access module and the host module;
the broadcast content source and the CAM are configured to communicate via the broadcast data path so as to transmit a client certificate to the CAM, as access-controlled broadcast data; and
the CAM is configured to transmit at least a part of the client certificate received from the broadcast content source to the host module via the encrypted communication link between the CAM and the host module, for storage by the host module as the network client certificate.

The invention provides an elegantly convenient way of distributing client certificates to receivers employing CAMs such as CI+ CAMs, by using the access controlled data path provided between a broadcast content source and the CAM to send the client certificate to the CAM, and then using the encrypted communication link between the CAM and the host module to send the client certificate to the host module.

This conveniently allows for the distribution of client certificates (for example, for use in verifying the receiver for internet (IPTV) reception) via a secure data path, so avoiding the need to distribute separate physical hardware such as smart cards, or to hard code the client certificate into the receiver at the time of manufacture.

Embodiments of the invention will now be described, by way of example only, with reference to the accompanying drawings, in which:
Figure 1 is a schematic diagram of an audio/video content delivery system comprising a host device with a CAM and a removable smart card;
Figure 2 is a schematic diagram of a conditional access (CA) system incorporating the host device of Figure 1;
Figure 3 is a schematic diagram illustrating the operation of the system of Figure 2;
Figure 4 schematically illustrates a part of the interaction between an IPTV content source and an IPTV receiver;
Figure 5 is a high level diagram of an IPTV audio/video content distribution system;
Figure 6 schematically illustrates a content path within the system of Figure 5; and
Figure 7 schematically illustrates certificate distribution in the system of Figure 5.

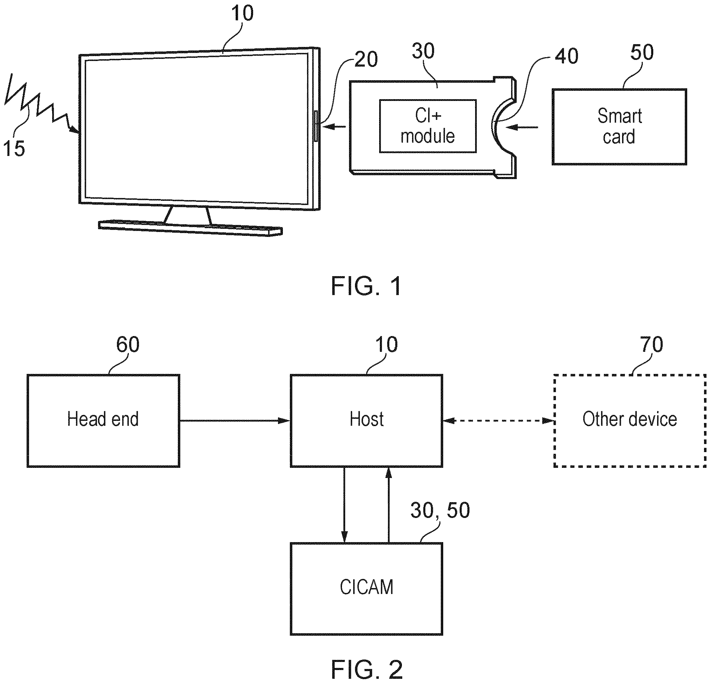

Referring now to Figure 1, a host device 10 is shown here as a television set but could be, for example, a set top box (noting that the expression "set top" does not imply, to the skilled person, any requirement for a particular physical position of the device in use). The host device 10 receives an access-controlled television signal 15 via a broadcast data path. This could be, for example, a satellite television signal received by a satellite dish (not shown), a terrestrial television signal, a cable television signal or the like, although other types of television signal will be discussed below. The host device 10 has a PCMCIA slot 20 which includes electrical connections and a physical space for a plug-in module, both according to the PCMCIA standard.

A CI+ conditional access module, referred to as a CICAM 30, is a PCMCIA module which can be plugged into the PCMCIA slot 20. When the CICAM 30 is fully plugged into the slot 20, electrical connections are made between connectors on the CICAM 30 and cooperating connectors within the slot 20.

The CICAM itself has a slot 40 into which a so-called smart card 50 may be inserted. The smart card is removable and carries information identifying or defining a current user of the content receiver in a tamper-proof, secure and non-volatile form. When the smart card is fully inserted in the slot 40, a data connection is formed between the smart card 50 and the CICAM 30, either by using cooperating electrical connectors on the smart card 50 and within the slot 40, or by using a known contactless connection technique in which data is transferred wirelessly over a very short range.

Figure 2 schematically illustrates the host device 10 in the context of a conditional access broadcast television system. A so-called head end 60 represents the source of the access-controlled television signal 15. The head end may represent, for example, an uplink station of a satellite broadcaster or a signal distribution centre of a terrestrial or cable broadcaster. The CA system scrambles content at the head end using a CA system encryption. The head end can also introduce other CA-related information into the encrypted data stream which enables the CICAM to descramble the content and to manage the subscriber's (user's) access and entitlements.

The head end 60 sends the television signal 15 to the host 10 which in turn passes the signal to the CICAM 30 for decryption of the access control encryption. The CICAM 30 then re-encrypts the signal using a local encryption and sends the re-encrypted signal back to the host 10 via the PCMCIA connection. The host decrypts the signal received from the CICAM 30 for display on a display screen or for supply to another device 70 such as a hard disc based video recorder.

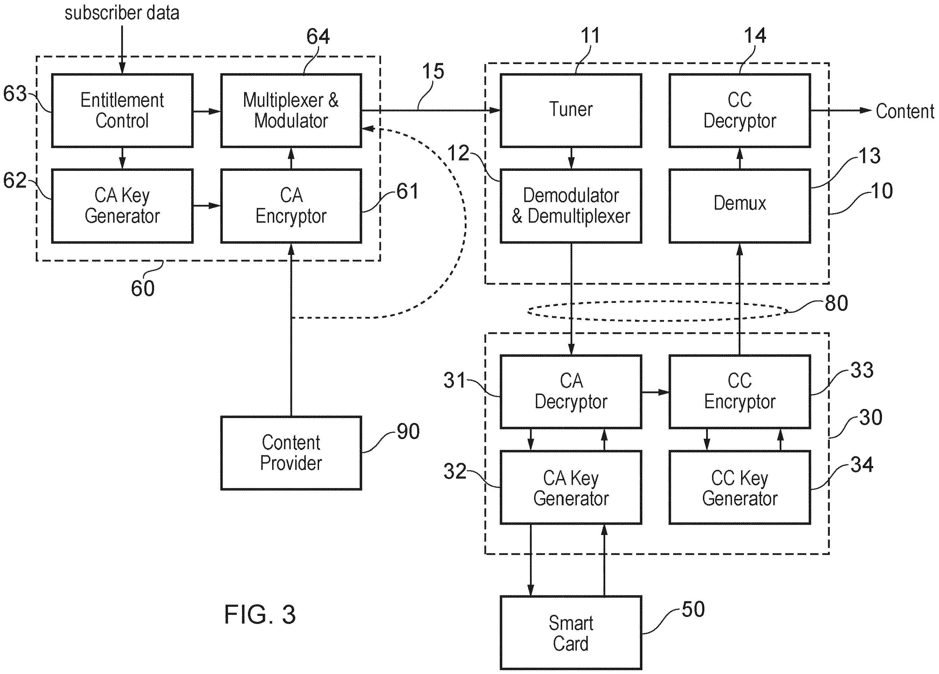

Figure 3 is a schematic diagram illustrating the operation of the system of Figure 2. The detailed operation of the system of Figure 3 is described in the CI Plus Specification 1.3 (2010-01), available (at the time of filing) at http://www.ci-plus.com/data/ci-plus_specification_v1.3.pdf. This document is incorporated by reference into the present description. The present description of Figure 3 simply provides an overview of that detailed operation, for the purposes of placing the subsequent description into the appropriate technical context.

As before, Figure 3 shows the head end 60 (which receives a content signal from a content provider 90), the host device 10, the CICAM 30 and the smart card 50. The signal 15 is shown passing from the head end 60 to the host device 10. The secure interface 80 between the host device 10 and the CICAM 30 is referred to as the common interface.

### Conditional Access

Known CA systems provide techniques by which a user can be denied or allowed access to a digital television stream. Access is provided only to those subscribers or users with valid payment accounts. In practical terms, a user is provided with a smart card 50 identifying that user in (ideally) a tamper-free way, and the system is set up so that only users with valid smart cards are able to obtain access to the access-controlled content.

Access control is provided by the use of scrambling and encryption. The content signal is scrambled with an 8-byte control word, which is changed frequently (up to several times per minute) to avoid the CA system being compromised by outside knowledge of the control word. The control words are transmitted to the receiver's CICAM, for descrambling of the scrambled content, in an encrypted form as an entitlement control message (ECM). The CICAM decrypts the control word to allow descrambling of the access-controlled content only when it is authorised to do so by receipt of an entitlement management message (EMM). EMMs are specific to each user or group of users; the CICAM confirms the rights which an EMM provides by comparing the user identification provided in the EMM with user information provided in the smart card 50. The EMMs can be sent less frequently than the ECMs, with intervals between successive EMMs in current commercial systems varying between 12 minutes and six weeks.

ECMs and EMMs themselves are well known message types in MPEG television distribution systems. The format of their payloads can be specific to the CA system in use, with the differences between formats often being semantic rather than having technical significance. However, where these features have technical relevance to the present embodiments, example formats will be given below.

### Head End

The head end 60 comprises a CA encryptor 61, a key generator 62, an entitlement control unit 63 and a multiplexer and modulator 64.

The content provider 90 supplies content (such as television signals) to the head end 60. The head end 60 applies conditional access (CA) scrambling and encryption to the content.

More specifically, the CA encryptor 61 encrypts or scrambles the content using a CA key as a control word. The CA key is generated by the CA key generator 62. The scrambled content generated by the CA encryptor is supplied to the multiplexer and modulator 64.

The CA key is also provided to the entitlement control unit 63, which generates ECMs based on the CA keys and EMMs based on subscriber data defining which subscribers are entitled to descramble which content streams. The ECMs and EMMs are supplied to the multiplexer and modulator 64. One or more scrambled content streams from the CA encryptor 61, one or more unscrambled (open access or "free to air") content streams and the entitlement control messages are multiplexed together to form a transport stream such as an MPEG2 transport stream. Known formats are used to carry the content data, the ECMs and the EMMs. The ECMs, EMMs and data defining the type of scrambling used on each elementary stream (corresponding to individual scrambled content streams) are provided in a known format in a conditional access table (CAT) which has a predetermined program identifier (PID) of 0x001, so that the CAT can be recognised at the CICAM.

The multiplexed transport stream is then modulated by the multiplexer and modulator 64 for transmission as a cable, satellite or terrestrial broadcast signal 15.

### Host Device

The host device 10 comprises a tuner 11, a demodulator and demultiplexer 12, a demultiplexer ("demux") 13 and a CC (content control) decryptor 14.

Depending on the type of broadcast signal 15, the tuner acts to transform the received signal back to baseband, so that the demodulator and demultiplexer 12 can select and demultiplex a single elementary content stream and associated CAT data from the received signal. The content stream and ECM / EMM data are passed via the common interface 80 to the CICAM 30.

In the case of access-controlled content data, at this stage the content data is still scrambled as it is passed via the common interface 80 to the CICAM 30. This part of the transmission over the common interface 80 is therefore secure by virtue of the CA encryption.

Assuming the ECM and EMM allow it, the CICAM 30 descrambles the content data and re-encrypts it using a content control (CC) encryption. The way in which this is done will be described below. The CC encrypted data is returned to the host device 10 where it is demultiplexed by the demux 13 and decrypted by the CC decryptor 14, so that it can be displayed or passed to another device 70 as clear content.

### CICAM

The CICAM 30 comprises a CA decryptor 31, a CA key generator 32, a CC encryptor 33 and a CC key generator 34.

The CA decryptor 31 and the CA key generator 32 may be considered as an access control unit for decoding access-controlled broadcast content or other data. The CC key generator 34 and CC encryptor 33 of the CICAM 30 and the Demultiplexer 13 and CC Decryptor 14 of the host device 10 cooperate to provide an encrypted communication link (the common interface 80) for decoded access-controlled encoded broadcast content between the CICAM and the host device.

The CA decryptor 31 uses keys generated from received ECMs and EMMs by the CA key generator 32, using checks of the user's identity from the smart card 50, to descramble the received access-controlled content. This part of the operation of the CICAM uses known CA techniques to retrieve and apply the CA keys.

Clear content data is passed from the CA decryptor 31 to the CC encryptor 33. However, as this data transfer is entirely internal to the CICAM, it can be rendered secure and tamper proof by known techniques such as by providing the CA decryptor 31, the CC encryptor 33 and the clear content interface within a single integrated circuit device.

The CC encryptor 33 encrypts the descrambled content using a CC key supplied by the CC key generator 34. This key is established by a secure interchange between the CICAM 30 and the host device 10, and is specific to that CICAM-host device pair. The CC-encrypted content is passed over the common interface 80 to the host device 10. Therefore, this part of the common interface is also secure, as the content data is CC-encrypted as it passes to the host device.

### Key Exchange

The CICAM 30 and the host device 10 both contain logic, firmware or software providing algorithms for Diffie-Hellman (DH) secure key exchange, hashing and encryption using the known algorithms SHA-256, DES and AES, respective certificates issued by a certifying authority such as CI Plus LLP, and private keys with the corresponding public keys.

When the CICAM 30 is first associated with the host device 10, the CICAM 30 initiates an authentication process with the host device 10. In this process, each device verifies the other's certificate, and the DH key exchange process takes place so as to securely share keys between the two devices. In particular, the CICAM first requests that the host device provides its certificate data. The CICAM verifies the signature on the host device's certificate. The same process is then carried out by the host requesting and verifying the CICAM's certificate. The CICAM and the host then each demonstrate that they possess the private key corresponding to the public key in the certificate by signing a DH public key and sending it to the other device for validation. The CICAM then obtains and verifies an authentication key AKH from the host. The CICAM and host start to compute and exchange key data for the encryption and authentication of data sent over the common interface 80.

After authentication, the CICAM also starts to compute the CC key. The CICAM can also instruct the host device to compute the CC key. The CC key is then used as described above to encrypt content data passed from the CICAM 30 to the host device 10, according to the AES algorithm. Therefore, it will be understood that the keys used for the secure common interface 80 are specific to a particular CICAM-host pair.

Techniques for using some or all of the arrangements described above to provide access control for material delivered over the internet will now be described.

### Digital Certificates

Some material available via the internet has unrestricted access by any user. That is to say, a user attempting to access that data does not need to provide any authentication of his identity or of his proper entitlement to access that data. However, in other instances, authentication between the browser (operated by the user attempting to access the data) and the server (the entity providing the data) is required in order to access an item of data. This type of authentication is carried out using so-called certificates.

One use of certificates is to validate the identity of the server, in order that the user can feel secure that the user's interaction with the server is private, and that the server properly represents who it claims to represent. To achieve this, the server operator obtains a certificate from a certificate authority. The certificate authority takes some steps to verify the identity and operation of the server before cryptographically signing a certificate (an electronic document) indicating contact and other details of the server.

Typically, a digital certificate might contain various data items, such as:
- a unique or quasi-unique serial number;
- details of the entity which is identified;
- a cryptographic signature and a specification of the algorithm used to create the cryptographic signature applied to the certificate;
- identification of the certificate authority;
- a validity period;
- a public cryptographic key and details of the purpose for which that public key is provided;
- a "thumbprint" or hash value derived from that certificate and details of the algorithm used to generate the thumbprint value.

Another use of certificates, relevant to the present embodiments, is to validate the identity of the user. In other words, the browser (or the device implementing the browser), rather than the server, is authenticated. The reason why a browser might need a certificate could be to allow the browser to access restricted content such as pay-TV content. Such a certificate is sometimes called a client certificate.

A client certificate can be used for example to control rights associated with IPTV services, for example a catch-up service in which certain programs (events) are available for download or streaming over an IP network for a predetermined period after broadcast via the television broadcast network. Such events are available via internet websites or portals. Different classes of device may use different certificates to determined rights access or what content is available. For example certain events may be chosen to be available when a Mobile phone or tablet device is used to access the portal, whilst the same program may not be available when accessed via a television receiver. This may be controlled by the certificate.

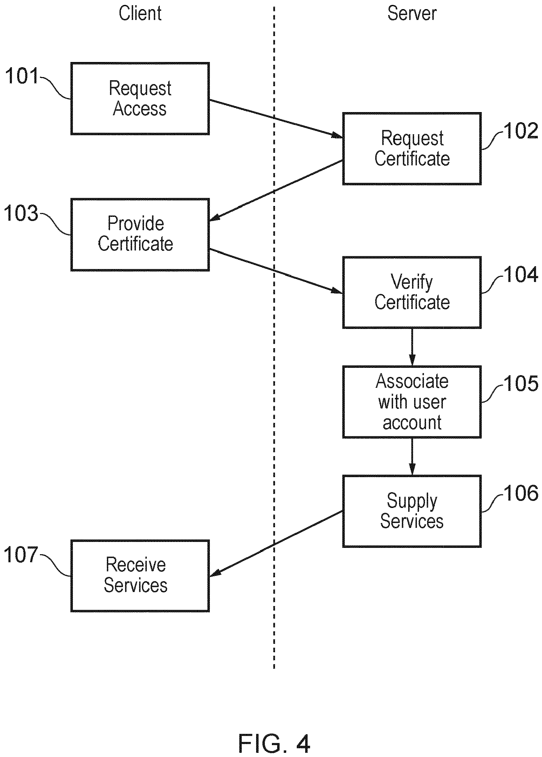

Figure 4 is a schematic diagram illustrating the high level interaction between a server (for example a head end in an internet television (IPTV) distribution arrangement, acting as a network content source) and an IPTV receiver (a network content receiver) acting as a client of the server. Figure 4 relates to the use of a client certificate; there may well be a verification of the server by the client requesting a server certificate, but that part of the interaction is routine and not directly relevant to embodiments of the invention. That part of the interaction is therefore not shown in Figure 4.

At a step 101, the client device requests access to the server. At a step 102, the server replies by issuing a request to verify the client's identity by a client certificate to be sent from the client to the server. At a step 103, the client provides its certificate to the server. At a step 104, the server verifies the certificate using known cryptographic verification. At a step 105 the server associates the verified certificate with a user account, and at a step 106 the server supplies services (such as pay television over IPTV) to the client, which the client receives at a step 107.

In embodiments of the invention, the actual client certificate is not sent from the client to the server, but rather a cryptographic hash of the client certificate, or a private-key-encrypted version of the client certificate, is sent.

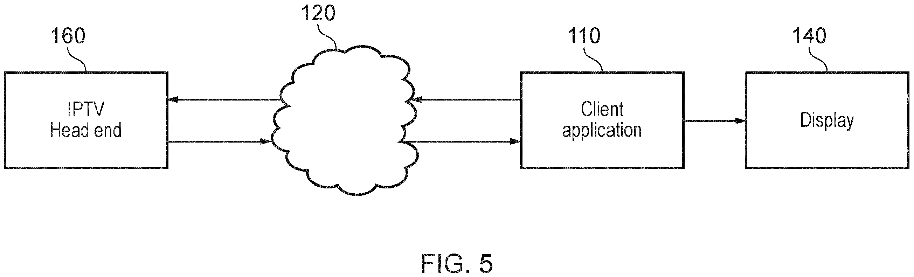

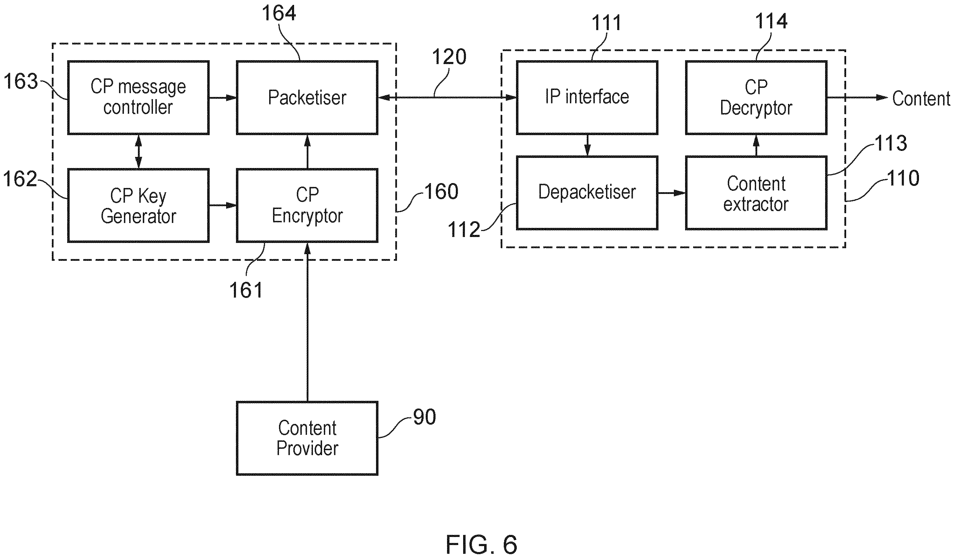

Figures 5 and 6 schematically illustrate a client (receiver) and server (head end) arrangement in an IPTV distribution system.

In general terms, and referring to Figure 5, an IPTV provider's head end 160 acts as a network content source to deliver access controlled television content to the host device running a client application 110 (acting as a host module or in a network content receiver, which may form part of a host device 10) over an internet connection 120. The client application communicates with the head end 160 to confirm the user's rights to the content. If the rights are valid then the head end 160 starts to send the content to the client application as video over IP which may be scrambled using an encryption technique such as the AES algorithm. The client application 110 receives, descrambles and renders the received content for display on a display screen 140.

Figure 6 schematically illustrates content signal handling within the IPTV content delivery system of Figure 5.

The features shown in Figure 6 bear a technical similarity to those shown in Figure 3, but in the context of IPTV delivery.

The head end 160 comprises a CP (content protection) encryptor 161 which receives content data from the content provider 90 and a key from a CP key generator 162. Communication of the CP keys to or from the content receiver is handled by a CP message controller 163. Content and message data are packetised for transmission over the internet data connection 120 by a packetiser 164.

A symmetric key (such as an AES key) is exchanged between the head end and the client application by known techniques.

The client application comprises an IP (internet protocol) interface 111 which passes received data to a depacketiser 112. A content extractor 113 retrieves content from the depacketised data and passes the content to a CP decryptor 114 which decrypts the content using the symmetric key, for example for passing to the display 140.

The content distribution path in Figure 6 is as follows. The client application 110 and the head end 160 interact to establish the fact that content data is to be sent from the head end 160, acting as a content source, to the client application 110, acting as a content receiver. This stage of the interaction involves at least a transmission of a client certificate from the client application to the head end (using the process described in connection with Figure 4), and may involve a bidirectional checking of certificates.

For example, a user of the client application may direct the client application to an internet address relating to the head end, with the head end acting in an internet broadcast more or a point to point transmission mode. Or the user of the client application may select content for viewing (such as a video on demand (VOD) movie) and the client application consults a look-up-table to determine a head end from which that content may be received, the client application then issuing a request to that head end. The head end may already have started distributing the required content (in the case of a multi-receiver or broadcast mode of operation) or may start the distribution in response to a request from the client application.

The CP encryptor 161 of the head end 160 encrypts the required content with a content key. The CP decryptor of the client application also holds that key (in the case of a symmetrical encryption algorithm) or a complementary private key (in the case of an asymmetrical or public-private key encryption algorithm).

The encrypted content is packetised and sent by the head end 160, via the internet data connection 120, to the client application 110 where it is depacketised and the CP-protected content is decrypted by the CP decryptor 114 for display.

In some embodiments, the CICAM (not shown in Figure 5 or Figure 6) need take no part in the content distribution data path.

A significant question in relation to a system such as the one described here is: how does the client application 100 initially receive a valid client certificate? It would be possible to include a client certificate at manufacture, but this is considered too limiting, in that it makes it difficult or impossible to selectively revoke a certificate if that certificate is found to be compromised, and to replace that certificate with a new version. Another alternative would be to include the client certificate in a user smart card, but that would also require new user smart cards to be sent to users in the event that a client certificate was revoked.

The solution presented here is to provide for delivery of the client certificate via the CA system and the secure common interface 80 between the CICAM 30 and the receiver 10. This arrangement operates on the basis that the receiver can operate as a broadcast receiver 10 (receiving access-controlled encoded broadcast content data via a broadcast data path separate to the IPTV content transmission path) and as a client application 110 of an IPTV receiver. The IPTV head end 160 can, but does not however need to, operate as a broadcast head end 60; the transmission of a client certificate to the receiver for use in receiving IPTV content can in fact be handled by the CA system of a separate broadcast head end. For example, the broadcast head end may be owned by the same company group as the IPTV server, or the broadcast head end may make a charge to transmit client certificates for third party IPTV servers.

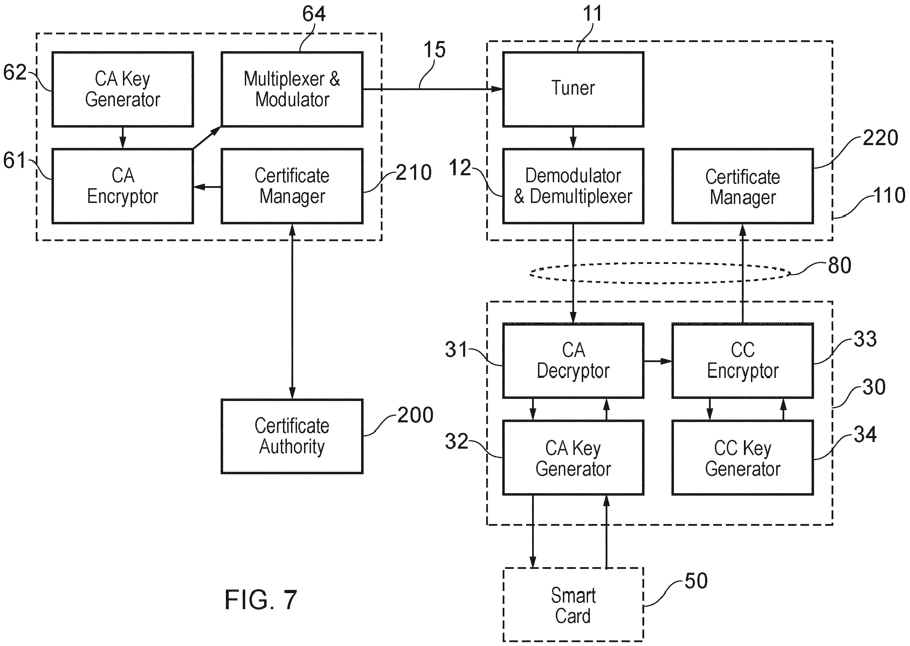

Figure 7 schematically illustrates the handling of client certificates within such an IPTV content delivery system.

A certificate authority 200 provides a client certificate relating to a particular client application 110 to a certificate manager 210 within a broadcast head end. The certificate is encrypted by the CA encryptor 61 using CA key information provided by the CA key generator 62. The encrypted client certificate is associated with entitlement control messages specifying one or more recipient users and is passed to the multiplexer and modulator 64 for broadcast transmission to the receiver. Therefore, the broadcast content source and the CICAM communicate, via the broadcast data path, so as to transmit the client certificate to the CICAM as access-controlled broadcast data.

At the receiver, the received message is tuned and demodulated before being passed to the CA decryptor 31 which, as described earlier, decrypts the received message and passes it, via the CC encryptor, the secure common interface 80 and the CC decryptor (not shown in Figure 7), to a certificate manager 220 of the receiver, implemented as part of the client application (acting as the host module of the network content receiver). The certificate manager 220 stores the client certificate. The client certificate is therefore delivered to the receiver and is ready for use in future interactions with IPTV head ends and the like. When a network content source requests the client certificate (or data derived from the client certificate) as in the step 102 of Figure 4 described above, the certificate manager either provides the required certificate (or data derived from it) to the client application 110 for transmission to the network content source (in the step 103 described above) or the certificate manager actually sends the certificate (or data derived from it) itself to the network content source.

Accordingly, the CICAM transmits the client certificate received from the broadcast content source via the secure common interface (acting as an encrypted communication link between the CICAM and the host device), for storage by the host device as the (or one of several) network client certificate.

It is not necessary that the whole amount of data received by the CICAM from the broadcast content source has to be transmitted to the host device. Some of the data received as part of the overall "client certificate" may actually be control data instructing the CICAM on how or where to store the remainder of the client certificate, or may be entitlement data which the CICAM compares with data stored on the smart card before determining whether to decrypt and pass the remainder of the client certificate to the host device 10. Such CICAM-specific data does not need to be sent to the host device.

The exact format of the messages forming part of the certificate transmission process need not be important. The transmission from the content source to the CICAM uses messaging formats associated with the CA system, which may be proprietary. However, as an example, the format of such a message from the content source to the CICAM could be as follows:

| | | | | | |
|---|---|---|---|---|---|
| Header | SenderlD | CAM and/or smart card ID | Encrypted Certificate | Digital Signature | Error protection |

The header can simply identify the message as a client certificate transmission message. The Sender ID indicates the origin of the certificate, which may be expressed as the identity of the IPTV head end (with which the certificate will eventually be used), the identity of the broadcast head end (which is sending the certificate) or, more likely, both. The CICAM and/or smart card ID identifies one or more CICAMs, and/or one or more users (via their smart cards) to receive, decrypt and store the certificate contained in the message. The encrypted certificate contains data representing the client certificate, encrypted according to the CA message encryption applicable to other CA messages (such as ECMs and EMMs) sent by the broadcast content source to that CICAM. The digital signature may be applied by the CA system of the broadcast content source so as to verify the origin of the message. Error protection data (such as error detection and/or error correction data) can also be applied by the broadcast content source.

The CICAM can compare the smart card ID received from the broadcast content source defining which user is (or which users are) entitled to use the attached client certificate, with user data stored on the currently loaded smart card, so as to determine whether or not to decrypt and/or transmit to the certificate manager the client certificate received from the broadcast content source.

The message as defined above may be converted into multiple packets for actual transmission, depending on the available message length of the CA system. The message may be transmitted more than once, for example at hourly intervals or as part of a carousel of such messages, so as to increase the likelihood of successful reception by the CICAM.

The client certificate may be sent from the CICAM to the client application by a cc_sac_data_req message, and an acknowledgement or other data sent from the client application to the CICAM by a cc_sac_data_cnf message, both message types being defined in the CI+ specification referenced above.

As an alternative arrangement, an IPTV head end 160 can transmit a client certificate to the CICAM using an encrypted low speed communications (LSC) internet link as defined in the CI+ standard referred to above. Such an arrangement would require a private key to be held at the CICAM for the receipt of encrypted messages of this nature.

Various refinements may be included in the system described above.

For example, the CICAM can be arranged to send a message to the certificate manager 220 indicating that the smart card 50 has been removed from the CICAM. Such a message can prompt the certificate manager 220 to delete and/or revoke any client certificates held by the certificate manager 220, or alternatively any client certificates which the certificate manager 220 obtained while that smart card 50 was associated with the CICAM.

The certificate manager 220 can also revoke and/or delete any client certificates held by the certificate manager 220, or alternatively any client certificates which the certificate manager 220 obtained while the CICAM was associated with the client application, if the CICAM is removed or otherwise disconnected.

An alternative route to revocation of a client certificate held by the certificate manager 220 is for the broadcast head end to send a message (as access-controlled broadcast data) to the CICAM indicating that a certificate is to be revoked. The certificate in question can be identified by identification data associated with the certificate itself and/or by data identifying the user (the owner of the smart card which was associated with the CICAM at the time that the certificate was received). In response to such a message, the CICAM can instruct the certificate manager to delete and/or revoke that certificate.

Each CICAM could receive an individual client certificate, or a batch of CICAMs (for example, those belonging to a certain class of IPTV subscribers) could receive the same client certificate.

It will be understood that the techniques described above may be carried out by specific hardware, general purpose hardware running appropriate software, semi-programmable hardware such as field programmable gate arrays or application specific integrated circuits, or combinations of these. It will be appreciated that where the techniques or part of them are carried out using software, such software, and a storage medium (for example a non-transitory machine-readable storage medium sucy as a magnetic or optical disk or a flash memory) carrying such software, are considered to represent embodiments of the invention.

## Claims

1. An audio/video content delivery system comprising a network content source linked by an internet data connection to a content receiver, the content receiver being configured to receive content from the network content source via the internet data connection and to receive access-controlled encoded broadcast content from that or another content source acting as a broadcast content source via a separate broadcast data path, in which:
the network content source is configured to request a client certificate from the content receiver for use in verifying the identity of the content receiver;
the content receiver comprises:
a host module configured to store a network client certificate and to send the network client certificate to the network content source in response to a request from the network content source; and
a removable conditional access module (CAM), the CAM having an access control unit for decoding the access-controlled encoded broadcast content, the host module and the removable CAM being arranged to provide an encrypted communication link for decoded access-controlled encoded broadcast content
between the conditional access module and the host module;
the broadcast content source and the CAM are configured to communicate via the broadcast data path so as to transmit a client certificate to the CAM, as access-controlled broadcast data; and
the CAM is configured to transmit at least a part of the client certificate received from the broadcast content source to the host module via the encrypted communication link between the CAM and the host module, for storage by the host module as the network client certificate.

2. A system according to claim 1, in which:
the CAM comprises a removable smart card identifying a current user of the network content receiver;
the CAM is configured to compare user data received from the broadcast content source with the user identification provided by the smart card to determine whether or not to decrypt and/or transmit to the host module the client certificate received from the broadcast content source.

3. A system according to claim 2, in which the host module is configured to revoke and/or delete a network client certificate received in respect of a user in response to removal of that user's smart card from the CAM.

4. A system according to any one of the preceding claims, in which:
the broadcast content source is configured to transmit a certificate revocation message to the CAM as access-controlled broadcast data; and
the CAM is configured to instruct the host module to revoke and/or delete a network client certificate indicated by the certificate revocation message.

5. A system according to any one of the preceding claims, in which the network content source is configured to send data to the host module as IP television data.

6. A system according to any one of the preceding claims, in which the CAM is a CAM according to the Common Interface plus standard.

7. An audio/video content receiver configured to receive encrypted content from a network content source via an internet data connection and to receive access-controlled encoded broadcast content from that or another content source acting as a broadcast content source via a separate broadcast data path, the content receiver comprising:
a host module configured to store a network client certificate and to send the network client certificate to the network content source in response to a request from the network content source; and
a removable conditional access module (CAM), the CAM having an access control unit for decoding the access-controlled encoded broadcast content, the host module and the removable CAM being arranged to provide an encrypted communication link for decoded access-controlled encoded broadcast content between the conditional access module and the host module;
in which:
the CAM is configured to communicate with the broadcast content source via the broadcast data path so as to receive a client certificate from the broadcast data source as access-controlled broadcast data; and
the CAM is configured to transmit at least a part of the client certificate received from the broadcast content source to the host module via the encrypted communication link between the CAM and the host module, for storage by the host module as the network client certificate.

8. An audio/video content delivery method in which a network content source is linked by an internet data connection to a content receiver, the content receiver being configured to receive content from the network content source via the internet data connection and to receive access-controlled encoded broadcast content from that or another content source acting as a broadcast content source via a separate broadcast data path; the content receiver comprising a host module configured to store a network client certificate and to send the network client certificate to the network content source in response to a request from the network content source; and a removable conditional access module (CAM), the CAM having an access control unit for decoding the access-controlled encoded broadcast content, the host module and the removable CAM being arranged to provide an encrypted communication link for decoded access-controlled encoded broadcast content between the conditional access module and the host module;
the method comprising the steps of:
the network content source requesting a client certificate from the content receiver for use in verifying the identity of the content receiver;
the broadcast content source and the CAM communicating via the broadcast data path so as to transmit a client certificate to the CAM as access-controlled broadcast data; and
the CAM transmitting at least a part of the client certificate received from the broadcast content source to the host module via the encrypted communication link between the CAM and the host module; and
the host module storing the client certificate received from the CAM as the network client certificate.

9. Computer software for implementing a method according to claim 8.

10. A computer program product comprising a storage medium which stores computer software according to claim 9.
